# EUROPÄISCHE PATENTSCHRIFT

(11) **EP 0 716 629 B1**
(45) Veröffentlichungstag und Bekanntmachung des Hinweises auf die Patenterteilung: **26.03.1997**
(21) Anmeldenummer: 94927540.8
(22) Anmeldetag: 02.09.1994
(51) Int. Cl.: B25J 15/04, B25J 9/14, B25J 19/00

(54) **WERKZEUGWECHSELEINRICHTUNG FÜR MANIPULATOREN**
TOOL-CHANGE DEVICE FOR MANIPULATORS
DISPOSITIF PERMETTANT DE CHANGER DES OUTILS SUR DES MANIPULATEURS

(30) Priorität: 04.09.1993 DE 9313310 U
(43) Veröffentlichungstag der Anmeldung: 19.06.1996
(73) Patentinhaber: KUKA Schweissanlagen & Roboter GmbH, D-86165 Augsburg (DE)
(72) Erfinder: ZIMMER, Ernst, 86316 Friedberg (DE)
(74) Vertreter: Ernicke, Hans-Dieter, Dipl.-Ing.
(86) Internationale Anmeldenummer: EP9402916
(87) Internationale Veröffentlichungsnummer: WO9507168

(56) Entgegenhaltungen:
- EP-A- 0 288 744
- FR-A- 2 596 495
- US-A- 4 767 257

## Beschreibung

Die Erfindung betrifft eine Werkzeugwechseleinrichtung für Manipulatoren, welche einen Drehanschluß für fluidische Versorungsleitungen des Werkzeuges mit den weiteren Merkmalen im Oberbegriff des Hauptanspruches aufweist.

Eine solche Werkzeugwechseleinrichtung ist aus der EP-A-0 288 744 bekannt. In der Werkzeugwechseleinrichtung ist ein Drehanschluß für fluidische Versorungsleitungen des Werkzeuges vorhanden, der ein Festteil mit Ringkanälen und ein Drehteil mit Stichkanälen aufweist. Die Ringkanäle sind am innenliegenden Umfang des Festteiles angeordnet und dabei in Richtung der Abtriebsdrehachse des Manipulators hintereinander positioniert. Bei der Montage des Drehanschlusses werden Festteil und Drehteil in Richtung der Abtriebsdrehachse des Manipulators zusammengefügt. Bei der vorbekannten Anordnung der Ringkanäle hat dies den Nachteil, daß bei der Montage die Dichtungen zwischen den Ringkanälen beschädigt werden können. Durch die umfangsseitige Anordnung der Ringkanäle hängt die Abdichtung ausschließlich von der Qualität der zwischen den Ringkanälen angeordneten Dichtungen und deren Expansionsvolumen ab. Es besteht keine Möglichkeit, bei der Montage beschädigte Dichtungen nachzuspannen oder auch Toleranzfehler auszugleichen.

Die FR-A-2 596 495 zeigt eine Dreh- und Antriebsverbindung für die Armteile eines Roboters. Für den Antrieb der relativ zueinander drehbaren Armteile sind hydraulische Drehzylinder vorgesehen. Der am gedrehten Armteil befindliche Drehzylinder wird von einer externen Hydraulikpumpe über einen Drehanschluß versorgt, der zwischen den Armteilen angeordnet ist. Der Drehanschluß bildet einen festen Bestandteil des Roboters, wobei die beiden Teile des Drehanschlusses mit jeweils einem Armteil starr verbunden sind. Der Drehanschluß weist Stichkanäle und konzentrisch um die Drehachse angeordnete Ringkanäle auf.

Aus der EP-B1 0 164 091 ist eine weitere Werkzeugwechseleinrichtung für Manipulatoren bekannt, die allerdings keinen Drehanschluß für die fluidischen Versorgungsleitungen aufweist. Hier wird die nötige Bewegungsfreiheit des Werkzeuges über die Flexibilität der angeschlossenen Versorgungsleitungen erreicht.

Es ist Aufgabe der vorliegenden Erfindung, eine Werkzeugwechseleinrichtung für Manipulatoren mit einem Drehanschluß aufzuzeigen, der eine höhere Montage- und Betriebssicherheit besitzt.

Die Erfindung löst diese Aufgabe mit den Merkmalen im Hauptanspruch.
Die erfindungsgemäße Ausbildung des Drehteils hat den Vorteil, daß bei der Montage die Dichtungen nicht mehr beschädigt werden können und daher in ihrer Funktion im Betrieb weniger beeinträchtigt sind. Außerdem ist der erfindungsgemäße Drehanschluß weniger toleranzempfindlich. Er hat eine bessere Paßgenauigkeit und Dichtigkeit. Insgesamt ergibt sich eine hohe Betriebssicherheit und zudem eine kleinere Baulänge. Dies ist von hoher Bedeutung mit Hinblick auf schwergewichtige Werkzeuge und große Stützmomente.

Die erfindungsgemäße Ausbildung des Drehanschlusses ermöglicht es auch, das Fest- und Drehteil in einem einstellbaren Spannschluß zusammenzuhalten und dadurch gegebenenfalls Anpreßkraft und -weg der Dichtungen einstellen zu können. Zu diesem Zweck ist vorteilhaft, den in einer flachen Plattenform bauenden Drehanschluß in einem zangenförmig umgebenden Gehäuse zu lagern. Die Verstellung des Spannschlusses läßt sich dabei auf einfache und genaue Weise über die Lagerung und eine Verstellung der Gehäuseteile realisieren. Vorteilhaft ist dabei die Anordnung eines Stützelementes zwischen Fest- und Drehteil zur Aufnahme von Kippkräften und zur Verringerung der Gleitreibung im normalen Belastungsfall.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Übersichtsdarstellung eines Manipulators mit einer Werkzeugwechseleinrichtung und einem Werkzeug,
- Figur 2:: in vergrößerter und abgebrochener Darstellung einen Querschnitt durch die Werkzeugwechseleinrichtung und den Drehanschluß und
- Figur 3:: eine Variante zu Figur 2 im Halbschnitt mit einem Stützelement zwischen Fest- und Drehteil.

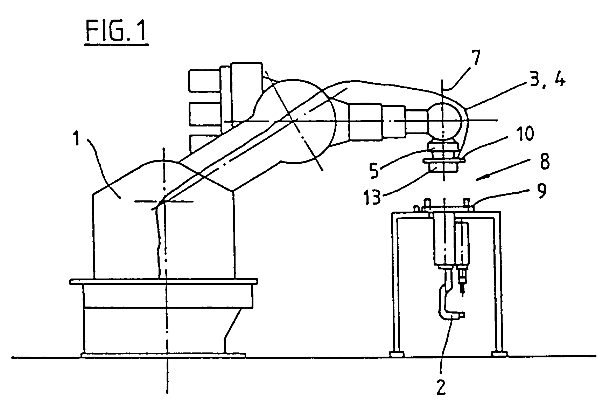

Figur 1 zeigt einen Manipulator (1) mit einer Werkzeugwechseleinrichtung (8) und einem Werkzeug (2). Der Manipulator ist als vorzugsweise sechsachsiger Industrieroboter ausgebildet. Er besitzt elektrische und fluidische Versorgungsleitungen (3,4), die vom Roboter (1) über die Werkzeugwechseleinrichtung (8) zum Werkzeug (2) geführt werden. Über die fluidischen Versorgungsleitungen (3) werden Kühlwasser, Öl oder Druckluft für fluidische Antriebe oder dgl. andere flüssige oder gasförmige Medien zum Werkzeug übertragen. Die Werkzeugwechseleinrichtung (8) ermöglicht es dem Manipulator (1), verschiedene Werkzeuge (2) aufzunehmen und beim mechanischen Ankuppeln zugleich die Versorgungsverbindung herzustellen.

Die Werkzeugwechseleinrichtung (8) hat einen Drehanschluß (13), mit dem beim Ankoppeln zumindest die fluidischen Versorgungsleitungen (3), gegebenenfalls auch die elektrischen Versorgungsleitungen (4), zum Werkzeug (2) drehbar durchgeschaltet werden können. Der Drehanschluß (13) besteht aus einem manipulatorseitigen Festteil (14) und einem dem gegenüber rotierfähigen und der Werkzeugseite zugeordneten Drehteil (15).

Der Manipulator (1) hat am vorderen Ende eine Hand (5) mit einem um die Abtriebsdrehachse (7) drehbaren Handflansch (6). Vom Gehäuse der Hand (5) ragt eine Momentenstütze (17) vor, an der das Festteil (14) des Drehanschlusses (13) abgestützt ist.

Die Werkzeugwechseleinrichtung (8) ist, abgesehen vom Drehanschluß (13), in ähnlicher Weise wie die aus der EP-B1 0 164 091 vorbekannte Kupplungskonstruktion ausgebildet. Beim Ankuppeln werden das mit dem Werkzeug (2) verbundene Kupplungsteil (9) und das manipulatorseitige Kupplungsteil (10) axial in Richtung der Abtriebsdrehachse (7) zusammengefügt. Mittels einer mit Indexen versehenen Zentriervorrichtung (11) wird die gegenseite Drehlage beim Ankuppeln exakt ausgerichtet. Anschließend tritt eine vom Handflansch (6) drehend angetriebene Spannvorrichtung (12) in Funktion, die die beiden Kupplungsteile (9,10) über eine Bajonnetführung axial längs der Achse (7) einander annähert und gegenseitig verriegelt. Die Kupplungsteile (9,10) sowie die Spannvorrichtung (12) und die Zentriervorrichtung (11) können je nach Bedarf unterschiedlich ausgebildet sein.

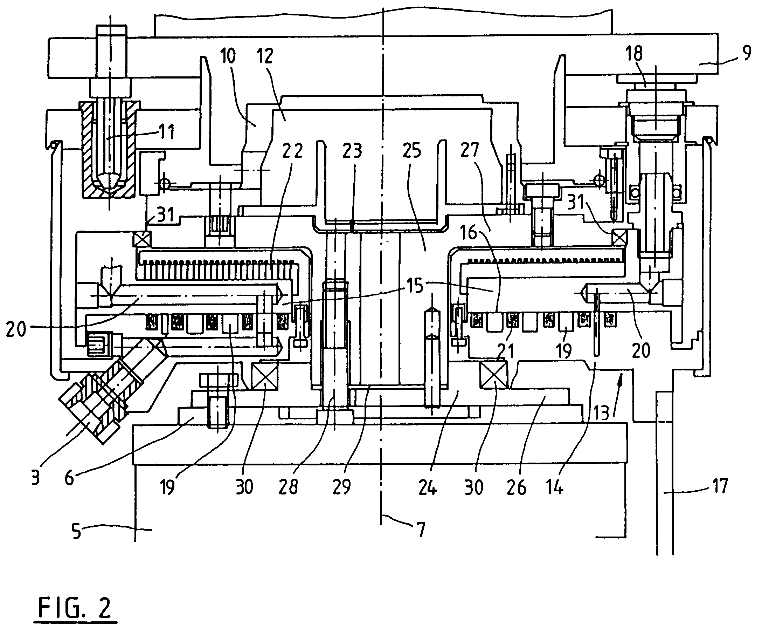

Beim Ineinandergreifen der Kupplungsteile (9,10) werden auch Steckverbindungen (18) für die fluidischen Versorgungsleitungen (3) und gegebenenfalls auch für die elektrischen Versorgungsleitungen (4) (in Fig. 2 nicht dargestellt) geschlossen. Über die Steckverbindungen (18) werden die aus dem Drehteil (15) des Drehanschlusses (13) kommenden Leitungsabschnitte mit den am Werkzeug (2) weiterführenden Leitungsabschnitten gekuppelt. Im gezeigten Ausführungsbeispiel bestehen die Steckverbindungen (18) aus Steckern am werkzeugseitigen Kupplungsteil (9), die in passende Buchsen am Drehanschluß (13) eingeführt werden. Die Anordnung kann auch umgekehrt sein. Die Steckverbindungen (18) können auch am Drehanschluß (13) teilweise blindgeschlossen sein, falls werkzeugseitg kein Leitungsbedarf vorhanden ist. Wie Figur (2) verdeutlicht, sind mehrere Steckverbindungen (18) rund um die Achse (7) verteilt am Drehanschluß (13) angeordnet.

Das Festteil (14) und das Drehteil (15) des Drehanschlusses (13) sind als drehbar gegeneinander geführte Ringscheiben ausgebildet. Das Festteil (14) und das Drehteil (15) berühren sich an einer Kontaktebene (16), welche quer zur Abtriebsachse (7) des Manipulators (1) bzw. des Handflansches (6) ausgerichtet ist. Das Festteil (14) weist mehrere Ringkanäle (19) mit dazwischenliegenden elastischen Dichtungen (21) auf, die in konzentrischen Kreisen um die Abtriebsdrehachse (7) angeordnet sind.

Die Dichtungen (21) bestehen aus einem geeigneten Dichtwerkstoff und einem in der Nut darunterliegenden geeigneten expandierenden Mittel, z.B. einem komprimierten O-Ring, einem Druckkissen oder dergleichen, welches den Dichtwerkstoff nach oben drückt und den Verschleiß kompensiert. Die Dichtungen (21) ragen etwas über die Ringscheiben-Oberfläche des Festteils (14). Das Drehteil (15) liegt auf den Dichtungen (21) auf, wobei ein kleiner Spalt zur Oberfläche der Ringscheibe des Festteils (14) besteht.

Die Ringkanäle (19) sind zur Kontaktebene (16) hin offen und korrespondieren hierbei jeweils mit einem zugehörigem Stichkanal (20) im Drehteil (15). Die Stichkanäle (20) führen jeweils zu einer Steckverbindung (18). Die Ringkanäle (19) sind jeweils mit einer manipulatorseitig zugeführten fluidischen Versorgungsleitung (3) verbunden.

Durch den Drehanschluß (13) kann das Werkzeug (2) mit dem Handflansch (6) beliebig drehen, wobei die fluidischen Versorgungsmittel über die Ringkanäle (19) und die Stichkanäle (20) zum Werkzeug (2) übertragen werden. Das Festteil (14) ist über die Momentenstütze (17) an der Hand (5) gehalten. Das Drehteil (15) ist über die Kupplungsteile (9,10) und die Zentriervorrichtung (11) mit dem Gehäuse (23) und dem Werkzeug (2) verbunden. Es kann sich mit dem Werkzeug (2) beliebig um die Achse (7) drehen.

Wie Figur 2 verdeutlicht, kann der Drehanschluß (13) auch Schleifkontakte (22) für die Drehübertragung elektrischer Versorgungsleitungen (4) aufweisen. Im gezeigten Ausführungsbeispiel handelt es sich um Steuerspannungen, die übertragen werden. Ergänzend können über dem Drehanschluß (13) auch höhere Spannungen und Ströme für das Werkzeug, z.B. Schweißströme oder dgl. mit ensprechenden Fest- und Drehteilen übertragen werden.

Der scheibenförmige und kompakte Drehanschluß (13) ist in einem Gehäuse (23) mittels Radial/Axiallager (30,31), z.B. in Form von Wälzlagern, gelagert. Das Lager (30) ist vorzugsweise als Drucklager mit einem kegelförmigen Rollen- oder Kegelkranz ausgebildet. Das Gehäuse (23) besteht aus einem mit dem Handflansch (6) verschraubten unteren Gehäuseteil (24) und einem oberen Gehäuseteil (25). Beide Gehäuseteile (24,25) besitzen ringförmige radial zur Achse (7) vorspringende Gehäuseflansche (26,27) mit denen sie den Drehanschluß (13) zangenförmig umgreifen. An den Gehäuseflanschen (26,27) sind auch die Radial/Axiallager (30,31) angeordnet. Die Gehäuseteile (24,25) sind längs der Achse (7) ineinandergesteckt und unter Einlage einer eingeschliffenen Distanzscheibe (29) miteinander verschraubt (28). Über die Verschraubung (28) und die Distanzscheibe (29) werden die Radial/Axiallager (30,31) und damit der Spannschluß zwischen Festteil (14) und Drehteil (15) eingestellt. Der Abstand zwischen den Gehäuseflanschen (26,27) und damit der Spannschluß zwischen Fest- und Drehteil (14,15) kann durch Austausch der Distanzscheibe (29) verändert werden. Damit läßt sich die Anpreßkraft und das Höhenmaß der Dichtungen (21) bzw. der Abstand zwischen den Ringscheiben-Oberflächen von Dreh- und Festteil (14,15) bedarfsgerecht beeinflussen.

Das Gehäuse (23) ist am manipulatorseitigen Handflansch (6) befestigt und auf der anderen Seite mit der Spannvorrichtung (12) im Kupplungsteil (10) verbunden. Beim Ankuppeln des Werkzeuges (2) dreht der Handflansch (6) nach dem axialen Zusammenfügen der Kupplungsteile (9,10) ein Stück, wobei die Spannvorrichtung (12) über die Drehung betätigt wird und die Kupplungsteile (9,10) zusammenzieht. Die Radial/Axiallager (30,31) ermöglichen hierbei die Spanndrehung des Gehäuses (23) gegenüber der bereits gekuppelten Steckverbindung (18), dem Festteil (14) und dem Drehteil (15). Das Festteil (14), das Drehteil (15) und das Kupplungsteil (9) drehen sich dabei nicht mit.

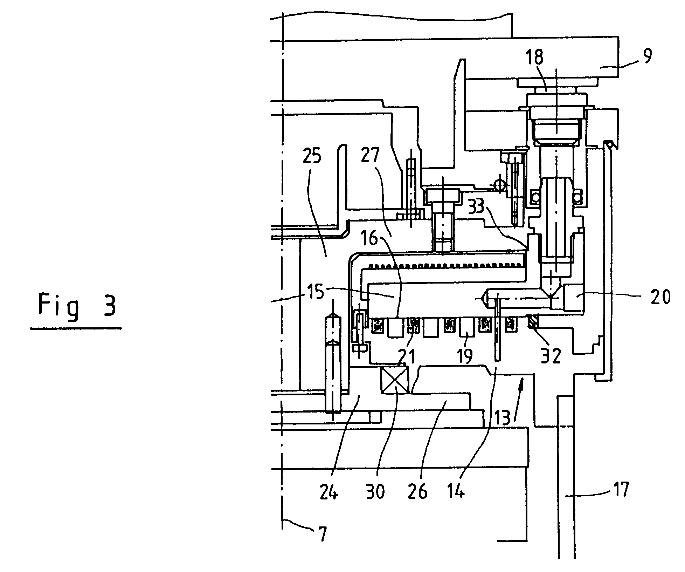

Figur 3 zeigt eine Variante. Zwischen Fest- und Drehteil (14,15) ist im Bereich der Kontaktebene (16) ein Stützelement (32) angeordnet, welches vorzugsweise als Gleitring aus Kunststoff oder einem anderen geeigneten Material ausgebildet ist. Er ist außen um die Ringkanäle (19) und die Dichtungen (21) gelegt. Das Stützelement (32) liegt an einer Stufe geführt auf dem Festteil (14) und hat einen geringfügigen Abstand zum Drehteil (15). Es nimmt die im Betrieb unter Last eventuell auftretenden Kippkräfte bzw. Kippmomente auf, indem es das beim Kippen anlaufende Drehteil (15) abstützt. Das Stützelement (32) sichert dabei den vorerwähnten Abstand zwischen Fest- und Drehteil (14,15) und verhindert eine Überlastung der Dichtungen (21). Zudem wird die Gleitreibung im normalen Belastungsfall vermindert.

Im Ausführungsbeispiel von Figur 3 ist außerdem auf das Wälzlager (31) verzichtet. Statt dessen ist eine axiale und radiale Führung (33) in Form eines abgestuften Bundes zwischen dem Gehäuseflansch (27) und dem Drehteil (15) vorgesehen. Der Spannschluß zwischen Fest- und Drehteil (14,15) ist in gleicher Weise wie beim Ausführungsbeispiel von Figur 2 einstellbar.

### BEZUGSZEICHENLISTE

- 1: Manipulator, Roboter
- 2: Werkzeug
- 3: Versorgungsleitung, fluidisch
- 4: Versorgungsleitung, elektrisch
- 5: Hand
- 6: Handflansch
- 7: Abtriebsdrehachse, Handachse
- 8: Werkzeugwechseleinrichtung
- 9: Kupplungsteil, Werkzeugseite
- 10: Kupplungsteil, Manipulatorseite
- 11: Zentriervorrichtung
- 12: Spannvorrichtung
- 13: Drehanschluß
- 14: Festteil
- 15: Drehteil
- 16: Kontaktebene
- 17: Momentenstütze
- 18: Steckverbindung
- 19: Ringkanal
- 20: Stichkanal
- 21: Dichtung
- 22: Schleifkontakte
- 23: Gehäuse
- 24: Gehäuseteil
- 25: Gehäuseteil
- 26: Gehäuseflansch
- 27: Gehäuseflansch
- 28: Verschraubung
- 29: Distanzscheibe
- 30: Radial/Axiallager
- 31: Radial/Axiallager
- 32: Stützelement, Gleitring
- 33: Führung

## Patentansprüche

1. Werkzeugwechseleinrichtung für Manipulatoren mit einem Drehanschluß für fluidische Versorgungsleitungen des Werkzeugs, der ein Festteil (14) und ein Drehteil (15) mit Ringkanälen (19) und Stichkanälen (20) aufweist, dadurch **gekennzeichnet**, daß die Kontaktebene (16) von Dreh- und Festteil (14,15) quer zur Abtriebsdrehachse (7) des Manipulators (1) ausgerichtet ist, und die Ringkanäle (19) in konzentrischen Kreisen um die Abtriebsdrehachse (7) angeordnet sind, wobei das Festteil (14) und das Drehteil (15) des Drehanschlusses (13) plan aneinanderliegen und im Gehäuse (23) des manipulatorseitigen Kupplungsteils (10) längs der Abtriebsdrehachse (7) in einem einstellbaren Spannschluß zusammengehalten sind.

2. Werkzeugwechseleinrichtung nach Anspruch 1, dadurch **gekennzeichnet**, daß das Gehäuse (23) zwei Gehäuseteile (24,25) aufweist, die den Drehanschluß (13) zangenförmig umschließen.

3. Werkzeugwechseleinrichtung nach Anspruch 1 oder 2, dadurch **gekennzeichnet**, daß die Gehäuseteile (24,25) durch eine Verschraubung (28) und eine Distanzscheibe (29) miteinander verbunden sind.

4. Werkzeugwechseleinrichtung nach Anspruch 1, 2 oder 3, dadurch **gekennzeichnet**, daß die Gehäuseteile (24,25) radial vorstehende Gehäuseflansche (26,27) aufweisen, an denen zumindest das Festteil (14) über ein Radial/Axiallager (30) gelagert ist.

5. Werkzeugwechseleinrichtung nach Anspruch 1 oder einem der folgenden, dadurch **gekennzeichnet**, daß zwischen Festteil (14) und Drehteil (15) neben den Dichtungen (21) ein Stützelement (32) angeordnet ist.

6. Werkzeugwechseleinrichtung nach Anspruch 5, dadurch **gekennzeichnet**, daß das Stützelement (32) als außenliegender Gleitring ausgebildet ist.

## Claims

1. A tool-changing device for manipulators, having a rotary connection for fluid supply lines to the tool, this rotary connection having a fixed part (14) and a rotary part (15) with annular channels (19) and branch channels (20), characterized in that the plane of contact (16) between the rotary and the fixed part (14, 15) is aligned transversely with respect to the output axis of rotation (7) of the manipulator (1), and the annular channels (19) are arranged in concentric circles around the output axis of rotation (7), the fixed part (14) and the rotary part (15) of the rotary connection (13) lying against one another in planar manner and being held together in the housing (23) of the coupling part (10) on the manipulator side along the output axis of rotation (7) such that they are clamped in adjustable manner.

2. A tool-changing device according to Claim 1, characterized in that the housing (23) has two housing parts (24, 25) which enclose the rotary connection (13) in the manner of tongs.

3. A tool-changing device according to Claim 1 or 2, characterized in that the housing parts (24, 25) are connected to one another by a screw connection (28) and a spacer disc (29).

4. A tool-changing device according to Claim 1, 2 or 3, characterized in that the housing parts (24, 25) have radially projecting housing flanges (26, 27) on which at least the fixed part (14) is mounted by way of a radial/axial bearing (30).

5. A tool-changing device according to Claim 1 or one of the subsequent claims, characterized in that a supporting element (32) is arranged between the fixed part (14) and the rotary part (15), next to the seals (21).

6. A tool-changing device according to Claim 5, characterized in that the supporting element (32) is constructed as an external sliding ring.

## Revendications

1. Dispositif de changement d'outil pour des manipulateurs, comportant un raccord tournant pour des lignes d'alimentation en fluide de l'outil, lequel comporte une partie fixe (14) et une partie (15) tournante comportant des canaux (19) annulaires et des canaux (20) de dérivation,
caractérisé en ce que le plan (16) de contact de la partie tournante et de la partie fixe (14, 15) est orienté transversalement à l'axe (7) de rotation mené du manipulateur (1) et les canaux annulaires (19) sont en cercles concentriques autour de l'axe (7) de rotation mené, la partie fixe (14) et la partie tournante (15) du raccord (13) tournant s'appliquant l'une à l'autre de manière plane et étant maintenues ensemble dans le boîtier (23) de la partie (10) d'accouplement du côté manipulateur le long de l'axe (7) de rotation mené en un blocage réglable.

2. Dispositif de changement d'outil suivant la revendication 1, caractérisé en ce que le boîtier (23) comporte deux parties (24, 25) de boîtier, qui entourent à la manière d'une pince le raccordement (13) tournant.

3. Dispositif de changement d'outil suivant la revendication 1 ou 2, caractérisé en ce que les parties (24, 25) du boîtier sont reliées entre elles par un vissage (23) et un disque (29) d'entretoise.

4. Dispositif de changement d'outil selon la revendication 1, 2 ou 3, caractérisé en ce que les parties (24, 25) de boîtier ont des brides (26, 27) de boîtier saillantes radialement, sur lesquelles est montée au moins la partie fixe (14) par l'intermédiaire d'un palier (30) radial/axial.

5. Dispositif de changement d'outil suivant la revendication 1 ou l'une des suivantes,
caractérisé en ce qu'il est prévu entre la partie fixe (14) et la partie tournante (15), outre des garnitures d'étanchéité (21), un élément (32) d'appui.

6. Dispositif de changement d'outil suivant la revendication 5, caractérisé en ce que l'élément (32) d'appui est sous forme d'un anneau de glissement se trouvant à l'extérieur.
